# EUROPEAN PATENT SPECIFICATION

(11) **EP 4 008 504 B1**
(45) Date of publication and mention of the grant of the patent: **08.10.2025**
(21) Application number: 21195574.5
(22) Date of filing: 08.09.2021
(51) Int. Cl.: B26D 7/01, B65H 35/00, B23K 26/00, B23K 26/38

(54) **CUTTING ASSEMBLY FOR MACHINE FOR PRODUCING COVERING CAPSULES FOR BOTTLE TOPS, MACHINE FOR PRODUCING COVERING CAPSULES FOR BOTTLE TOPS, AND CUTTING METHOD**
SCHNEIDEANORDNUNG FÜR MASCHINE ZUR HERSTELLUNG VON ABDECKKAPSELN FÜR FLASCHENDECKEL, MASCHINE ZUR HERSTELLUNG VON ABDECKKAPSELN FÜR FLASCHENDECKEL UND SCHNEIDVERFAHREN
ENSEMBLE DE COUPE POUR MACHINE DE PRODUCTION DE CAPSULES DE SURBOUCHAGE DE PARTIES SUPÉRIEURES DE BOUTEILLES, MACHINE DE PRODUCTION DE CAPSULES DE SURBOUCHAGE DE PARTIES SUPÉRIEURES DE BOUTEILLES ET PROCÉDÉ DE DÉCOUPE

(30) Priority: 03.12.2020 IT 202000029714
(43) Date of publication of application: 08.06.2022
(73) Proprietor: Rebel Dynamics S.r.l., 23900 Lecco (IT)
(72) Inventor: PALAMARA, Luca, I-23900 LECCO (IT); TODESCHINI, Giovanni, I-23900 LECCO (IT)
(74) Representative: De Lorenzo, Danilo

(56) References cited:
- EP-A1- 0 363 285
- EP-A1- 2 681 125
- EP-B1- 2 681 125
- FR-A1- 2 743 059
- IT-A1- VE 970 030
- IT-A1- VE 970 031

## Description

This invention relates to a cutting assembly for a machine for producing covering capsules for bottle tops, a machine for producing covering capsules for bottle tops, and a method for cutting a thin strip for producing a covering capsule for bottle tops.

It is known in the art to use covering capsules for bottle tops, that is, decorative and protective cork covers for bottles, typically wine bottles, or for other uses, in which covering the top is required and, when necessary, part of the bottle neck. The aforesaid cork covers, also known in the art as bottle capsules or wine capsules, are typically made of Polyvinyl chloride (PVC), or PET or aluminum or aluminum polylaminate and PET or of more or less shrinkable materials.

The capsules made of PVC are very popular for versatility, economy, and ease of application as a safety seal.

For producing the aforesaid capsules, machines suitable for producing the correct capsule geometry from a sheet of PVC or aluminum (polylaminate) are known in the art. A known machine for producing capsules for bottle tops is disclosed in document ITVE970031A1.

The machines of the prior art divide the activity into two main sections. In the tail section, the machining takes place on the body of the capsule. In particular, in the tail section, a sheet of plastic or aluminum material is unwound from a reel in the form of a single thin strip. In a first step, the thin strip is cut and then passed through a dandy roll, which allows the transition of the strip from a continuous to an intermittent movement, facilitating the execution of subsequent processes. Subsequent processes comprise printing and engraving for the insertion of a small strip that will facilitate tearing the capsule during opening.

In the head section of the machine, the sheet advances by successive steps to be portioned and wound on a spindle. In this section, the portion of thin strip (the so-called "leaf"), is picked up by a suction device placed between two knives for cutting the strip.

Once the strip has been cut by the knives (or blades), the thin sheet obtained is placed under a spindle and wound on the latter, after having undergone a gluing operation, so as to form the shell of the capsule (generally in the shape of a truncated cone).

Then, by means of a rotary table, the wound sheet is conveyed first under a hot air gun to make the excess material on the spindle head shrink and then to a further step of gluing a disc to close the capsule shell, i.e., to form the upper closing base of the truncated cone.

The finished capsule is then cooled by an air jet and trimmed to the required height.

Unfortunately, during the cutting stage, the machines of the prior art are subject to a high production of waste and therefore are not very efficient. In particular, this is due to the need to use a pair of blades, the first blade being intended to separate the sheet from the strip attached to the reel and the second blade to define the shape of the frustoconical capsule, while generating waste.

A part of the residual material is removed from the cutting area by a blower and the resulting truncated cone is maintained adhered to a carriage for transport to the next station by means of a suction unit.

It is clear, therefore, that the machines of the prior art suffer from numerous limits linked to low efficiency, excessively large overall dimensions due to the presence of two cutting blades and the relative actuation mechanics, as well as work speeds limited by the mechanics of the blade movements, their replacement due to wear, and the need to modify the blades or their arrangement every time a change of capsule layout is required.

Therefore, there is a strong need to propose a cutting assembly for machines for producing covering capsules for bottle tops, and a thin strip cutting method for producing covering capsules for bottle tops, which are able to overcome the aforesaid drawbacks of the prior art.

Said requirement is satisfied with a cutting assembly for a machine for producing covering capsules for bottle tops, with a machine for producing covering capsules for bottle tops, and a cutting method, according to the appended independent claims. The dependent claims describe preferred or advantageous embodiments.

The features and advantages of the cutting assembly for a machine for producing covering capsules for bottle tops, of the machine for producing covering capsules for bottle tops, and of the cutting method will in any case be evident from the following description of their preferred embodiments, provided by way of non-limiting example, with reference to the accompanying figures, wherein:

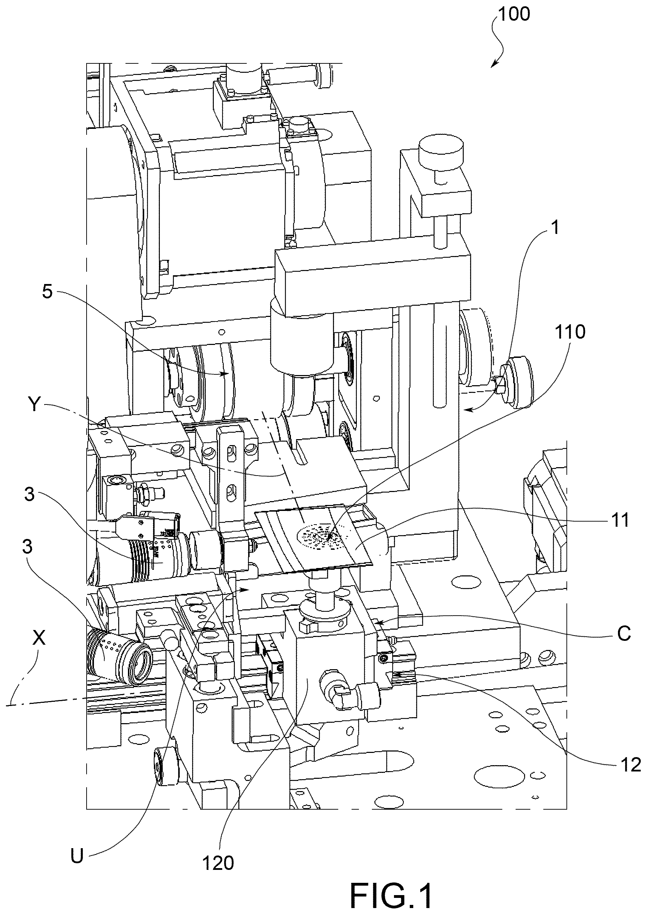

Fig. 1 is an axonometric view of a machine for producing covering capsules for bottle tops according to an embodiment of this invention;

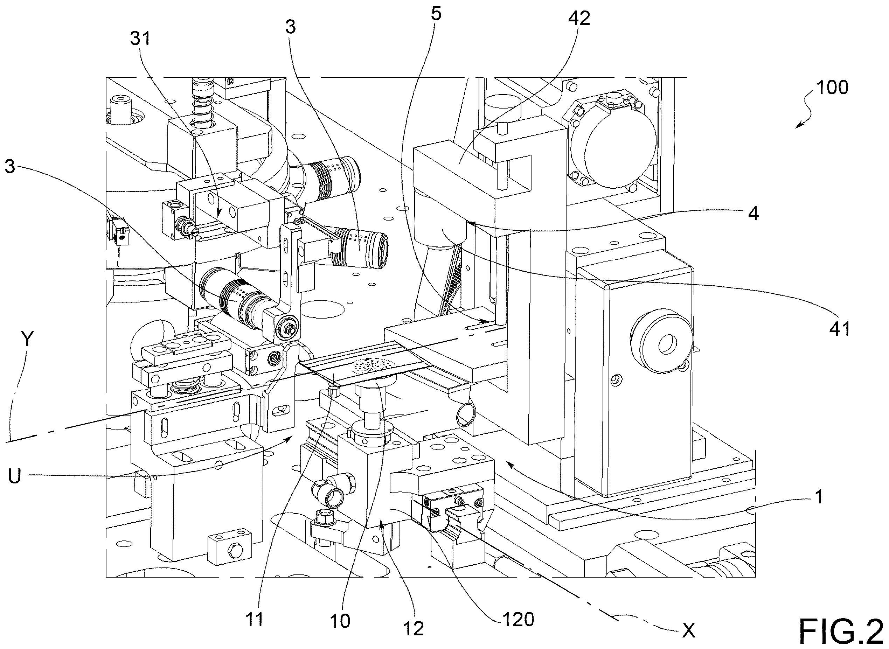

Fig. 2 is an axonometric view of the machine in Fig. 1, from another viewing angle;
Fig. 3 is an example of a covering capsule for bottle tops obtainable from a machine for producing covering capsules for bottle tops according to this invention.

With reference to the aforesaid figures, reference numeral 1 has been used to indicate a cutting assembly 1 for a machine 100 for producing covering capsules 2 for bottle tops.

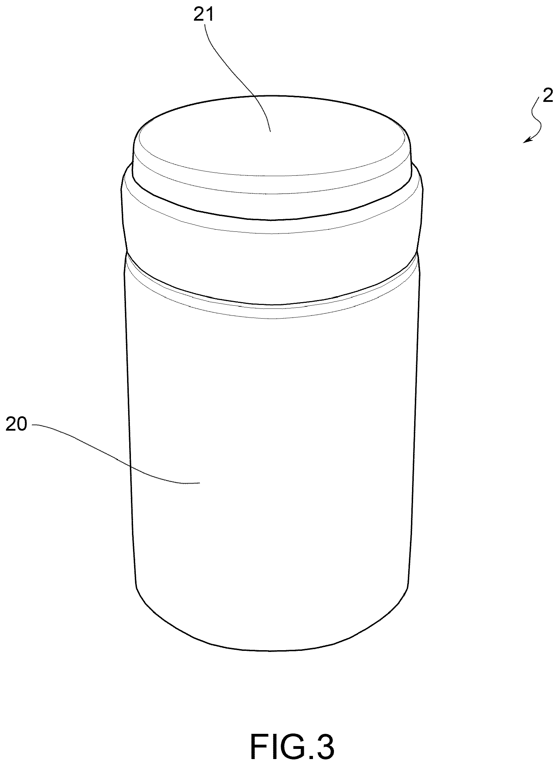

Fig. 3 is an example of a covering capsule 2 obtainable through the machine 100, provided with a cover 20 and a head disk 21 enclosing the base of the cover 20. Said covering capsules 2 are typically used for covering tops and necks of wine bottles or the like and are also known as wine capsules.

According to the invention, the machine 100 for producing covering capsules for bottle tops comprises a strip unwinding assembly known to the person skilled in the art (not shown), suitable for unwinding a strip made of a plastic material or a metal material, such as PVC, PET or aluminum polylaminate, for producing a covering capsule 2.

The machine 100 further comprises a dandy roll assembly, also known to the person skilled in the art and not shown in the figures, arranged downstream of the strip unwinding assembly and suitable for transforming the transition movement of the thin strip from a continuous movement to an intermittent movement.

A cutting assembly feeding station 5 of the machine 100 is arranged downstream of the dandy roll assembly and is suitable for transporting the thin strip to a cutting assembly 1 and in particular to a support table 10 of the cutting assembly 1.

The cutting assembly 1, per se a subject of this invention, comprises a support table 10, suitable for supporting the thin strip made of a plastic material or a metal material for producing a covering capsule 2.

The cutting assembly 1 further comprises a support table movement unit 12 suitable for moving the support table 10 from a cutting position C, in which the support table 10 is arranged to allow the cutting of the thin strip for obtaining a thin sheet 11, to an unloading position U, in which the support table is spaced apart from the cutting position C and is positioned close to a next work station, for example a winding station 31, i.e., close to a spindle 3 for winding the thin sheet 11 so as to form the cover 20 of the capsule.

Additionally, the cutting assembly 1 comprises a laser unit 4, positioned close to the cutting position C and comprising a laser head 41 suitable for emitting a laser beam for laser cutting the thin strip when the support table 10 is in the cutting position C so as to obtain a thin sheet 11 intended to be then directly wound in the winding station 31, for example around a spindle 3.

According to one embodiment, the laser unit 4 comprises a crosspiece 42 for supporting the laser head 41. Said laser head 41 is thus supported by the supporting crosspiece 42 above and in a manner spaced apart from the support table 10 when said support table 10 is in the cutting position C.

According to one embodiment, the support table movement assembly 12 comprises a carriage 120 which is translatable along a longitudinal direction X. In this variant, the carriage 120 supports the support table 11 and is translatable along said longitudinal direction X from the cutting position C to the unloading position U.

According to an advantageous embodiment, the cutting assembly 1 comprises suction means, not shown. In this variant, the support table 11 comprises suction openings 110 operatively connected to the suction means, so that said suction openings 110 are suitable for sucking up the thin strip when arranged on the support table 10 to hold it in place during laser cutting to obtain the thin sheet 11.

In this discussion, it is therefore clear that the term "thin strip" refers to the initial thin strip that is unwound in its entirety from a reel for subsequent cutting operations, while the term "thin sheet" 11 refers to a discrete thin sheet, obtained downstream of the laser cutting step and that already has the ideal and final geometry to be wound by a subsequent winding station for the formation of the cover of the covering capsule 2.

It is clear, therefore, that the machine 100 according to this invention also comprises a winding station 31, arranged downstream of the cutting assembly 1 and comprising one or more spindles 3 suitable for receiving the thin sheet 11 cut by the cutting assembly 1 for winding it about the spindle to form the cover 20 of the capsule 2.

Preferably, extremely advantageously, the machine 100 is devoid of a blower device for removing the waste generated in the step of cutting the thin strip when the support table 10 is in the cutting position C. This is enabled by the fact that laser cutting allows precise cutting of the desired shape of the thin sheet 11 to be performed immediately.

According to an advantageous embodiment, the cutting assembly feeding station 5 is configured to carry the thin strip along a main transport direction Y, substantially perpendicular to the longitudinal direction X of translation of the carriage 120. This results in a machine that is much more compact with respect to the machines of the prior art.

It is moreover an object of this invention to provide a method for cutting a thin strip for producing a capsule 2 for bottle tops, preferably produced by means of a machine 100 described in the preceding paragraphs.

The method comprises the following operating steps, in the stated order:
- feeding a thin strip from a cutting assembly feeding station 5 towards a table 10 for supporting the thin strip;
- cutting the thin strip by laser cutting performed by a laser unit 4 for obtaining a thin sheet 11 arranged on the support table 10;
- moving the support table 10 to a winding station 31 for winding the thin sheet 11.

Preferably, in the step of cutting the thin strip, the method provides for the laser unit to perform the laser cut at a speed of between 0.5 m/s and 3 m/s, preferably at a power of between 20W and 60W. This results in optimum cutting cycle times for a thin sheet with a thickness of about 0.1 mm, for example between 0.08 and 0.12 mm.

Preferably, the method comprises the step of preloading a virtual drawing of the laser cut to be made on the thin strip onto a storage medium and sending cutting commands to the laser unit 4 according to the preloaded virtual drawing.

Innovatively, this invention overcomes the drawbacks of cutting assemblies and machines of the prior art.

In particular, due to the presence of the laser cutting unit, it is possible to obtain a considerable reduction of the overall dimensions with respect to the machines of the prior art. Moreover, synergistically to the reduction of the overall dimensions, the presence of the laser cutting unit allows for the two cutting steps which are required by the machines of the prior art to be realized in only one cutting step, that is, the first cut for detaching from the strip and the second cut for defining the geometry.

Moreover, advantageously, the presence of laser cutting allows cutting speeds to be reached up to 50% higher than the cutting speeds reachable by the machines of the prior art, which are instead limited by the movement speed of the blade units.

Advantageously, the presence of laser cutting allows the production of waste, typical of the prior art, to be eliminated, thereby increasing the productivity of the machine while employing the same amount of strip.

Moreover, due to the presence of laser cutting, it is possible to quickly change the cutting geometry.

In addition, the elimination of waste production means that there is no need to use blowing devices, thus further reducing the overall dimensions and allowing the arrangement of the stations that compose the machine to be made more compact, for example by bringing the cutting station closer to the winding station on the spindle, as shown in the accompanying figures.

Furthermore, the costly blade change operations typical of the prior art are no longer necessary.

A person skilled in the art may, in order to meet specific needs, make several changes to the embodiments of this invention or substitutions of elements with other functionally equivalent ones.

These variants are also contained within the scope of protection as defined by the following claims.

## Claims

1. A cutting assembly (1) for a machine (100) for producing covering capsules (2) for bottle tops, such as wine capsules, said cutting assembly (1) comprising a support table (10), suitable for supporting a thin strip made of a plastic material or a metal material for producing a covering capsule (2) for bottle tops;
said cutting assembly (1) being **characterized in that** it comprises:
- a support table movement unit (12) suitable to move the support table (10) from a cutting position (C), in which the support table (10) is arranged so as to allow the cutting of the thin strip for obtaining a thin sheet (11), to an unloading position (U), in which the support table is spaced apart from the cutting position (C) and is positioned close to a next work station, for example, close to a spindle (3) for winding the thin sheet (11);
- a laser unit (4), positioned close to the cutting position (C) and comprising a laser head (41) suitable for emitting a laser beam for laser cutting the thin strip, when the support table (10) is in the cutting position (C).

2. Cutting assembly (1) according to claim 1, wherein the laser unit (4) comprises a crosspiece (42) for supporting the laser head (41), said laser head (41) being supported by the support crosspiece above and spaced apart from the support table (10), when said support table (10) is in the cutting position.

3. Cutting assembly (1) according to claim 1 or 2, wherein the support table movement unit (12) comprises a carriage (120) which is translatable along a longitudinal direction (X),
wherein said carriage (120) supports the support table (11),
and wherein said carriage (120) is translatable along said longitudinal direction (X) from the cutting position (C) to the unloading position (U).

4. Cutting assembly (1) according to any one of the preceding claims, comprising suction means and wherein the support table (11) comprises suction openings (110) operatively connected to the suction means, so that said suction openings (110) are suitable for sucking up the thin strip when arranged on the support table to hold it in place during the laser cutting.

5. A machine (100) for producing covering capsules (2) for bottle tops, said machine (100) comprising
- a cutting assembly (1) according to any one of the preceding claims
- a strip unwinding assembly, suitable for unwinding a strip made of a plastic material or a metal material for producing a covering capsule (2) for bottle tops;
- a dandy roll assembly, arranged downstream of the strip unwinding assembly and suitable for transforming the transition movement of the strip from a continuous movement to an intermittent movement;
- a cutting assembly feeding station (5), arranged downstream of the dandy roll assembly and suitable for carrying the strip onto the support table (10) of the cutting assembly (1);
- a winding station (31), arranged downstream of the cutting assembly (1) and comprising one or more spindles (3) suitable for receiving the thin sheet (11) cut by the cutting assembly (1) for winding it about the spindle to form the cover (20) of the capsule (2).

6. Machine for producing covering capsules (2) for bottles according to claim 5, wherein said machine (100) is devoid of a blower device for removing the waste generated during the step of cutting the thin strip, when the support table (10) is in the cutting position (C).

7. Machine for producing covering capsules (2) for bottles according to claim 5 or 6, wherein the cutting assembly feeding station (5) is configured to carry the thin strip along a main transverse transport direction (Y), perpendicular to the longitudinal translation direction (X) of the carriage (120).

8. A method for cutting a thin strip for producing a capsule (2) for bottle tops comprising the following operating steps, in the stated order, of:
- feeding a thin strip from a cutting assembly feeding station (5) towards a table (10) for supporting the thin strip;
- cutting the thin strip by laser cutting performed by a laser unit (4) for obtaining a thin sheet (11) arranged on the support table (10);
- moving the support table (10) towards a winding station (31) for winding the thin sheet (11).

9. Method according to claim 8, wherein the step of cutting the thin strip provides for the laser unit to perform the laser cut at a speed between 1 m/s and 3 m/s.

10. Method according to claim 8 or 9, comprising the step of pre-loading, onto a storage medium, a virtual drawing of the laser cut on the thin strip and sending cutting commands to the laser unit according to the pre-loaded virtual drawing.

## Patentansprüche

1. Schneideanordnung (1) für eine Maschine (100) zur Herstellung von Abdeckkapseln (2) für Flaschendeckel, wie beispielsweise Weinkapseln, wobei die Schneideanordnung (1) einen Auflagetisch (10) umfasst, der geeignet ist, einen dünnen Streifen aus Kunststoffmaterial oder Metallmaterial zur Herstellung einer Abdeckkapsel (2) für Flaschendeckel zu tragen;
wobei die Schneideanordnung (1) **dadurch gekennzeichnet ist, dass** sie umfasst:
- eine Auflagetisch-Bewegungseinheit (12), die geeignet ist, den Auflagetisch (10) von einer Schneidposition (C), in der der Auflagetisch (10) angeordnet ist, sodass das Schneiden des dünnen Streifens zum Erhalten einer dünnen Folie (11) ermöglicht wird, in eine Entladeposition (U) zu bewegen, in der der Auflagetisch von der Schneidposition (C) beabstandet ist und in der Nähe einer nächsten Arbeitsstation positioniert wird, beispielsweise in der Nähe einer Spindel (3) zum Aufwickeln der dünnen Folie (11);
- eine Lasereinheit (4), die in der Nähe der Schneidposition (C) angeordnet ist und die einen Laserkopf (41) umfasst, der geeignet ist, einen Laserstrahl zum Laserschneiden des dünnen Streifens zu emittieren, wenn sich der Auflagetisch (10) in der Schneidposition befindet.

2. Schneideanordnung (1) nach Anspruch 1, wobei die Lasereinheit (4) ein Querstück (42) zum Tragen des Laserkopfs (41) umfasst, wobei der Laserkopf (41) durch das Querstück oberhalb des Auflagetisches (10) getragen wird und von diesem beabstandet ist, wenn sich der Auflagetisch (10) in der Schneidposition befindet.

3. Schneideanordnung (1) nach Anspruch 1 oder 2, wobei die Auflagetisch-Bewegungseinheit (12) einen Wagen (120) umfasst, der entlang einer Längsrichtung (X) verschiebbar ist,
wobei der Wagen (120) den Auflagetisch (11) trägt,
und wobei der Wagen (120) entlang der Längsrichtung (X) von der Schneidposition (C) zu der Entladeposition (U) verschiebbar ist.

4. Schneideanordnung (1) nach einem der vorhergehenden Ansprüche, umfassend Saugmittel und wobei der Auflagetisch (11) Saugöffnungen (110) umfasst, die operativ mit den Saugmitteln verbunden sind, sodass die Saugöffnungen (110) geeignet sind, den dünnen Streifen anzusaugen, wenn er auf dem Auflagetisch angeordnet ist, um ihn während des Laserschneidens in Position zu halten.

5. Maschine (100) zur Herstellung von Abdeckkapseln (2) für Flaschendeckel, die Maschine (100) umfassend:
- eine Schneideanordnung (1) nach einem der vorhergehenden Ansprüche
- eine Streifenabwicklungseinheit, die geeignet ist, einen Streifen aus Kunststoffmaterial oder Metallmaterial zum Herstellen einer Abdeckkapsel (2) für Flaschendeckel abzuwickeln;
- eine Dandywalzeneinheit, die stromabwärts der Streifenabwicklungseinheit angeordnet ist und geeignet ist, die Verschiebungsbewegung des Streifens von einer dauerhaften Bewegung in eine abwechselnde Bewegung umzuwandeln;
- eine Schneideanordnung-Vorschubstation (5), die stromabwärts der Dandywalzeneinheit angeordnet ist und geeignet ist, den Streifen auf den Auflagetisch (10) der Schneideanordnung (1) zu führen;
- eine Aufwickelstation (31), die stromabwärts der Schneideanordnung (1) angeordnet ist und eine oder mehrere Spindeln (3) umfasst, die geeignet sind, die dünne Folie (11), die durch die Schneideanordnung (1) geschnitten wird, aufzunehmen und sie um die Spindel aufzuwickeln, um die Abdeckung (20) der Kapsel (2) zu bilden.

6. Maschine zur Herstellung von Abdeckkapseln (2) für Flaschen nach Anspruch 5, wobei die Maschine (100) nicht mit einer Gebläsevorrichtung zum Entfernen des Abfalls versehen ist, der während des Schrittes des Schneiden des dünnen Streifens erzeugt wird, wenn sich der Auflagetisch (10) in der Schneidposition (C) befindet.

7. Maschine zur Herstellung von Abdeckkapseln (2) für Flaschen nach Anspruch 5 oder 6, wobei die Schneideanordnung- Vorschubstation (5) dazu konfiguriert ist, den dünnen Streifen entlang einer Hauptquertransportrichtung (Y) zu führen, die sich senkrecht zu der Längsverschiebungsrichtung (X) des Wagens (120) erstreckt.

8. Verfahren zum Schneiden eines dünnen Streifens zur Herstellung einer Kapsel (2) für Flaschendeckel, umfassend die folgenden Arbeitsschritte in der angegebenen Reihenfolge von:
- Verschieben eines dünnen Streifens von einer Schneideanordnung-Vorschubstation (5) zu einem Tisch (10) zum Tragen des dünnen Streifens;
- Schneiden des dünnen Streifens durch Laserschneiden, das von einer Lasereinheit (4) durchgeführt wird, um eine dünne Folie (11) zu erhalten, die auf dem Auflagetisch (10) angeordnet ist;
- Bewegen des Auflagetisches (10) zu einer Aufwickelstation (31) zum Aufwickeln der dünnen Folie (11).

9. Verfahren nach Anspruch 8, wobei der Schritt des Schneiden des dünnen Streifens vorsieht, dass die Lasereinheit das Laserschneiden mit einer Geschwindigkeit zwischen 1 m/s und 3 m/s durchführt.

10. Verfahren nach Anspruch 8 oder 9, umfassend den Schritt des Vorabladen einer virtuellen Zeichnung des Laserschneiden auf dem dünnen Streifen auf ein Speichermedium und des Senden Schneidbefehlen an die Lasereinheit nach der vorab geladenen virtuellen Zeichnung.

## Revendications

1. Un ensemble de coupe (1) pour une machine (100) de production de capsules (2) de surbouchage de parties supérieures de bouteilles, telles que des capsules pour vin, ledit ensemble de coupe (1) comprenant une table de support (10), adaptée à supporter une bande mince en matériau plastique ou en matériau métallique pour la production d'une capsule (2) de surbouchage de parties supérieures de bouteilles ;
ledit ensemble de coupe (1) étant **caractérisé en ce qu'**il comprend :
- une unité de mouvement de table de support (12) adaptée à déplacer la table de support (10) d'une position de coupe (C), dans laquelle la table de support (10) est agencée de manière à permettre la coupe de la bande mince pour obtenir une feuille mince (11), à une position de déchargement (U), dans laquelle la table de support est éloignée de la position de coupe (C) et est positionnée à proximité d'une station de travail suivante, par exemple, à proximité d'une broche (3) pour l'enroulement de la feuille mince (11) ;
- une unité laser (4), positionnée à proximité de la position de coupe (C) et comprenant une tête laser (41) adaptée à émettre un faisceau laser pour la coupe laser de la bande mince, lorsque la table de support (10) est dans la position de coupe (C).

2. Ensemble de coupe (1) selon la revendication 1, dans lequel l'unité laser (4) comprend une traverse (42) pour le support de la tête laser (41), ladite tête laser (41) étant supportée par la traverse de support au-dessus et espacée de la table de support (10), lorsque ladite table de support (10) est dans la position de coupe.

3. Ensemble de coupe (1) selon la revendication 1 ou 2, dans lequel l'unité de mouvement de table de support (12) comprend un chariot (120) translatable selon une direction longitudinale (X),
dans lequel ledit chariot (120) supporte la table de support (11),
et dans lequel ledit chariot (120) est translatable selon ladite direction longitudinale (X) de la position de coupe (C) à la position de déchargement (U).

4. Ensemble de coupe (1) selon l'une quelconque des revendications précédentes, comprenant des moyens d'aspiration et dans lequel la table de support (11) comprend des ouvertures d'aspiration (110) connectées de manière fonctionnelle aux moyens d'aspiration, de sorte que lesdites ouvertures d'aspiration (110) sont adaptées à aspirer la bande mince lorsqu'elle est disposée sur la table de support pour la maintenir en place pendant la coupe laser.

5. Une machine (100) pour la production de capsules (2) de surbouchage de parties supérieures de bouteilles, ladite machine (100) comprenant
- un ensemble de coupe (1) selon l'une quelconque des revendications précédentes
- un ensemble de déroulement de bande, adapté à dérouler une bande en matériau plastique ou en matériau métallique pour la production d'une capsule (2) de surbouchage de parties supérieures de bouteilles ;
- un ensemble rouleau presseur, agencé en aval de l'ensemble de déroulement de bande et adapté à transformer le mouvement de transition de la bande d'un mouvement continu à un mouvement intermittent ;
- une station d'alimentation de l'ensemble de coupe (5), agencée en aval de l'ensemble rouleau presseur et adaptée à acheminer la bande sur la table de support (10) de l'ensemble de coupe (1) ;
- une station d'enroulement (31), agencée en aval de l'ensemble de coupe (1) et comprenant une ou plusieurs broches (3) adaptées à recevoir la feuille mince (11) coupée par l'ensemble de coupe (1) pour l'enrouler autour de la broche afin de former le couvercle (20) de la capsule (2).

6. Machine pour la production de capsules (2) de surbouchage de parties supérieures de bouteilles selon la revendication 5, dans laquelle ladite machine (100) est dépourvue d'un dispositif de soufflage pour l'évacuation des déchets générés pendant l'étape de coupe de la bande mince, lorsque la table de support (10) est dans la position de coupe (C).

7. Machine pour la production de capsules (2) de surbouchage de parties supérieures de bouteilles selon la revendication 5 ou 6, dans laquelle la station d'alimentation de l'ensemble de coupe (5) est configurée pour acheminer la bande mince selon une direction principale de transport transversale (Y), perpendiculaire à la direction de translation longitudinale (X) du chariot (120).

8. Un procédé de coupe d'une bande mince pour la production d'une capsule (2) de surbouchage de parties supérieures de bouteilles comprenant les étapes opératoires suivantes, dans l'ordre indiqué, de :
- alimentation d'une bande mince depuis une station d'alimentation (5) de l'ensemble de coupe vers une table (10) de support de la bande mince ;
- coupe de la bande mince par coupe laser effectuée par une unité laser (4) pour obtenir une feuille mince (11) disposée sur la table de support (10) ;
- déplacement de la table de support (10) vers une station d'enroulement (31) pour l'enroulement de la feuille mince (11).

9. Procédé selon la revendication 8, dans lequel l'étape de coupe de la bande mince prévoit que l'unité laser effectue la coupe laser à une vitesse comprise entre 1 m/s et 3 m/s.

10. Procédé selon la revendication 8 ou 9, comprenant l'étape de préchargement, sur un support de stockage, d'un dessin virtuel de la coupe laser sur la bande mince et l'envoi des commandes de coupe à l'unité laser en fonction du dessin virtuel préchargé.
